Europäisches Patentamt

European Patent Office

Office européen des brevets

(11) Veröffentlichungsnummer: **0 177 881**
A2

# (12) EUROPÄISCHE PATENTANMELDUNG

(21) Anmeldenummer: 85112405.7

(22) Anmeldetag: 01.10.85

(51) Int. Cl.⁴: **B 23 Q 11/00**

(30) Priorität: 04.10.84 IT 2299184

(43) Veröffentlichungstag der Anmeldung: 16.04.86
Patentblatt 86/16

(84) Benannte Vertragsstaaten: DE FR GB IT

(71) Anmelder: Mecof S.p.A., Via Molino Casello Ovada,
I-15070 Belforte Monferrato (IT)

(72) Erfinder: Ollearo, Giorgio, Via Boggio, 3, I-10015 Ivrea
(TO) (IT)

(74) Vertreter: Mayer, Hans Benno, Via dell'Orso 7/A,
I-20121 Milano (IT)

(54) Ausgleichsvorrichtung fuer eine Werkzeugmaschine.

(57)   Die Erfindung betrifft eine Ausgleichsvorrichtung für eine Werkzeugmaschine, besonders für eine Fräsmaschine, die mit einem in Horizontalrichtung verschiebbar gelagerten Werkzeugspindelstock ausgerüstet ist, der erhebliche Länge aufweist und an einem Zugseil oder einer Zugkette aufgehängt ist, die durch einen Hydraulikzylinder zum Gewichtsausgleich beaufschlagt wird.

EP 0 177 881 A2

0177881

- 2 -

Akte No. 03-273

Mecof S.p.A.

15070 - Belforte Monferrato .

(Italien)

"Ausgleichsvorrichtung fuer eine Werkzeugmaschine"

Die vorstehende Erfindung betrifft eine Ausgleichsvorrichtung fuer eine Werkzeugmaschine, die mit einem horizontal verschiebbaren Spindelstock ausgeruestet ist, der erhebliche Laenge aufweist.

Es ist bekannt, dass in Fraesmaschinen oder Bohrwerken der in einer Horizontalebene verfahrbare Spindelstock mit einer Werkzeugaufnahmespindel ausgeruestet ist. Der Spindelstock ist schlittenartig ausgebildet und ist entlang Vertikalfuehrungen des Maschinengestelles verfahrbar.

Es ist ferner bekannt, dass bei grosser Ausfahrlaenge des Spindelstockes, fuer den Fall, dass sich das zu bearbeitende Werkstueck auf maximalem Abstand von den Horizontalfuehrungen des Schlittens befindet, der in vertikaler Richtung am Maschinengestell verfahrbar ist, aufgrund des Eigengewichtes der Werkzeugspindel die Tendenz besteht, dass sich das vordere Ende der Spindel bzw. des Spindelstockes nach unten neigt. Dadurch

- 3 -

nimmt in erheblichem Masse die Bearbeitungsgenauigkeit der durchzufuehrenden Bohr- und Fraesvorgaenge ab. Auch fuer sehr grosse Werkzeugmaschinen dieser Art ist aber heute eine Genauigkeit erwuenscht, die sich in Groessenordnungen von wenigen 1/100 mm befindet. Um den geschilderten Nachteil zu vermeiden, ist es bisher in Werkzeugmaschinen dieser Art ueblich gewesen, komplizierte und aufwaendige Vorrichtungen vorzusehen, mit denen versucht wurde, die unerwuenschte Neigung des Spindelstockes bei maximalem Abstand des Werkzeuges, gegenueber den Horizontalfuehrungen auszugleichen.

Die bekannten Vorrichtungen haben sich nicht nur als besonders teuer erwiesen, es ist auch nicht moeglich, ein staendig einwandfreies, sicheres Arbeiten dieser Vorrichtungen zu gewaehrleisten, besonders was die einzuhaltenden Genauigkeitstolleranzen anbelangt.

Es ist daher Aufgabe der vorstehenden Erfindung, eine verbesserte Ausgleichsvorrichtung der genannten Art vorzuschlagen, die einen konstruktiv aeusserst einfachen Aufbau aufweist, kostenguenstig herzustellen ist und ferner ein sicheres Funktionieren gewaehrleistet, und fuer jede Arbeitsstellung des Werkzeuges bzw. des Spindelstockes gegenueber dem Maschinengestell einen einwandfreien Ausgleich ermoeglicht, um den Spindelstock stets in horizontaler Lage zu halten.

Diese Aufgabe wird erfindungsgemaess dadurch geloest, dass das eine Ende eines Ausgleichsseiles oder einer Ausgleichskette in Uebereinstimmung mit dem Schwerpunkt eines verschiebbaren Spindelstockes der Werkzeugmaschine an diesem befestigt ist, dass dieses Seil von einem um eine vertikale Achse schwenkbar gelagerten Arm aufgenommen wird, dass dieser Schwenkarm mit einem Zahnsegmente wirkverbunden ist, mit dem ein ueber einen steuerbaren Servomotor angetriebenes Zahnrad in Wirkverbindung steht, dass dem schwenkbaren Arm ein weiteres Zahnsegment zugeordnet ist, das mit dem Zahnrad eines ersten Transduktors wirkverbunden ist, dass der verschiebbare Spindelstock ferner eine Zahnstange aufweist, die mit dem Zahnrad eines zweiten Transduktors in Wirkverbindung steht, und dass die Ausgaenge des ersten Transduktors und die Ausgaenge des zweiten Transduktors mit einer Vergleichereinheit verbunden sind, die aufgrund eines Differenzsignals zwischen den Transduktorausgangssignalen ein verstaerktes Ausgangssignal abgibt, das der Steuervorrichtung des steuerbaren Motors zugefuehrt wird.

Mit einer Ausgleichsvorrichtung dieser Art wird erreicht, dass die horizontale Achse des Spindelstockes einer Werkzeugmachine, der verschiebbar an einem vertikal beweglich vorgesehen Schlitten angeordnet ist, staendig beibehalten wird, unabhaengig von der Groesse der Ausfahrbewegung des Spindelstockes, da der als abkragend ausgebildet Schwenkarm den Spindelstock bei einem horizontalen Verfahren stets synchron mit der Horizonalverschiebung verfolgt. Weitere Vorteile der vorstehenden Erfindung koennen der nun folgenden Beschreibung, den Unteranspruechen und den Zeichnungen entnommen werden.

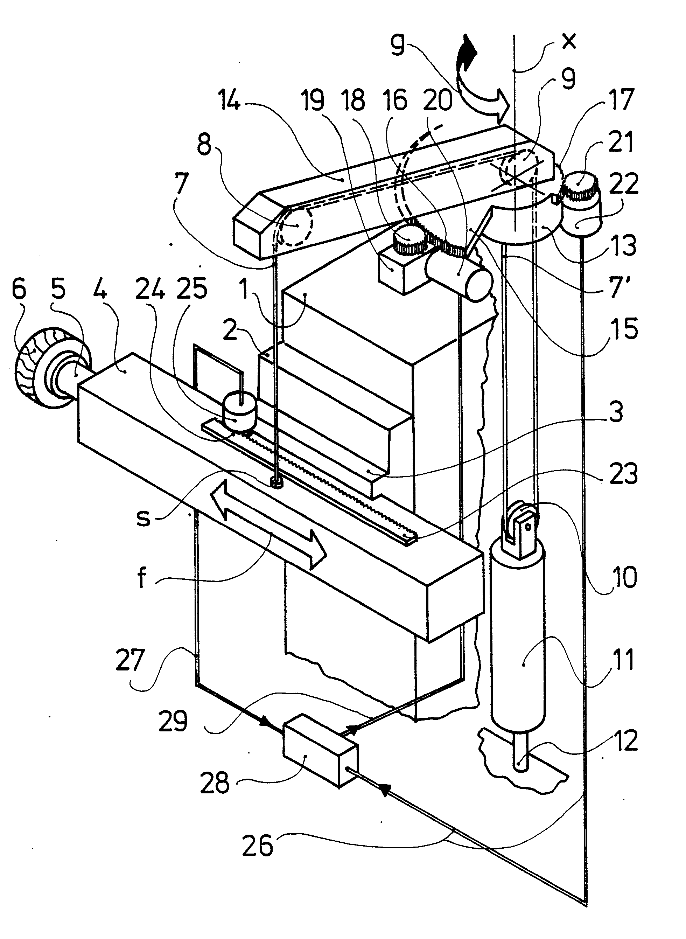

Der Erfindungsgegenstand wird nun anhand eines Ausfuehrungsbeispieles genauer beschrieben und in der Zeichnung, anhand eines Ausfuehrungsbeispieles, dargestellt.

Die beigefuegte Zeichnung zeigt schematisch in perspektivischer Ansicht die erfindungsgemaesse Vorrichtung.

Wie der beigefuegten Zeichnung zu entnehmen ist, weist der Staender 1 der Werkzeugmaschine einen Schlitten 2 auf, der in bekannter Weise entlang nicht dargestellter Vertikalfuehrungen verschiebbar ist. Der Schlitten 2 weist ferner horizontal angeordnete Fuehrungen 3 auf, die einen Spindelstock 4 aufnehmen und erlauben, dass der Spindelstock 4 Horizontalverschiebungen in Richtung des Pfeiles f durchfuehrt. Der Spindelstock 4 kann erhebliche Laengenabmessungen annehmen und lagert drehbar eine Werkzeugspindel 5, die an ihrem Ende ein Bearbeitungswerkzeug 6 aufnimmt, das fuer die entsprechende spanabhebende Bearbeitung geeignet ist.

In Uebereintimmung mit dem Schwerpunkt S des Spindelstockes 4, ist ein Ende eines Seiles oder einer Kette 7 befestigt, wobei das Seil oder die Kette ueber Umlenkrollen 8 und 9 mit einem weiteren Umlenkrad 10 verbunden sind. Das Umlenkrad 10 ist mit einem hydraulischen Ausgleicheszylinder 11 wirkverbunden, dessen Kolbenstange 12 fest mit dem Koerper der Werkzeugmaschine verbunden ist. Das andere Ende 7' der Kette 7 ist mit einem Support 13 verbunden, der fest am Staender 1 der Werkzeugmaschine montiert ist.

Ein Teilstueck der Kette oder des Seiles 7, sowie die Umlenkraeder 8 und 9 sind im Inneren eines horizontal abkragenden Armes 14 angeordnet.

Der Arm 14 kann um eine Vertikalachse X wie durch den Pfeil g angedeutet ist, verschwenkt werden. Der Kragarm 14 ist ferner mit einer Platte 15 wirkverbunden, die auf einer Seite eine Verzahnung 16 aufweist, die sich entlang einem Bogenstueck der Platte 15 erstreckt. Die Platte 15 weist auf der der Verzahnung 16 gegenueberliegenden Seite eine sich entlang eines Bogens erstreckende Verzahnung 17 auf. Mit der Verzahnung 16 steht ein Zahnrad 18 eines Reduziergetriebes 19 in Wirkverbindung. Das Reduziergetriebe 19 ist ueber einen steuerbaren Servomotor 20 antreibar. Mit der Verzahnung 17 steht ein Zahnrad 21 in Wirkverbindung, das Bestandteil eines Transduktors 22 oder einer aehnlichen Vorrichtung zum Erfassen der genauen Stellung der Platte 15 ist. Mit dem Spindelstock 4 steht ferner eine Zahnstange 23 in Wirkverbindung. Die Zahntange 23 ist parallel zu den Horizontalfuehrungen 3 des Spindelstockes 4 angeordnet. Mit der Zahnstange 23 steht ein Zahnrad 24 eines weiteren Transduktors 25 (oder einer gleichwertigen Positionserfassungsvorrichtung) in Wirkverbindung.

Der Ausgang des Transduktors 22 steht ueber eine Leitung 26 und der Ausgang des Transduktors 25 ueber eine Leitung 27 mit einer elektronischen Vergleichereinheit 28 in Verbindung. Die Vergleichereinheit 28 weist ein bekanntes Vergleicherglied auf, welches bei Auftreten eines Differenzsignals zwischen den beiden von den Transduktoren 25 und 22 kommenden Signalen ein verstaerktes Steuersignal abgibt, das ueber die Leitung 29 den steuerbaren Servomotor 20 zugeleitet wird, um somit das Reduziergetriebe 19 anzutreiben. Die Arbeitsweise der erfindungsgemaessen Ausgleichsvorrichtung ist folgende:

Wenn der Spindelstock 4 in einer der Richtungen gemaess Pfeil (f) verschoben wird, so wird der Transduktor 25 aktiviert und gibt ueber die Leitung 27 Positionssignale ab, die von der Lage des Schwerpunktes S des Spindelstockes 4 gegenueber dem Staender 1 der Werkzeugmaschine abhaengig sind, d.h. in Bezug auf die horizontalen Fuehrungen 3. Dieses Signal wird in der elektronischen Vergleichervorrichtung 28 mit dem vom Transduktor 22 kommenden Signal verglichen. Wenn die Vorrichtung 28 eine Differenz zwischen dem von Transduktor 25 kommenden Signalen und den vom Transduktor 22 kommenden Signalen feststellt, so wird ein Differenzausgangssignal gebildet, das ueber die Leitung 29 (nach vorheriger Verstaerkung) dem Motor 20 zugeleitet wird. Der Motor 20 ist als steuerbarer Motor ausgebildet und somit wird ueber das antreibbare Zahnrad 18 die Platte 15 und somit der Arm 14 in der einen oder anderen Richtung (Pfeil g) motorisch verschwenkt. Somit folgt der Kragarm 14 stets der Verschiebebewegung des Spindelstockes 4 (Pfeil f). Damit wird gewaehrleistet, dass das entsprechende Teilstueck des Halteseiles oder der Haltekette 7 stets senkrecht zum Spindelstock 4 ausgerichtet ist und stets ein optimaler Gewichtsausgleich erfolgt.

Die erfindungsgemaesse Vorrichtung arbeitet vollkommen automatisch, und die Verschwenkbewegung (g) des Kragarmes 14 erfolgt synchron zur Verschiebebewegung (f) des Spindelstockes 4, wodurch mit hoechster Praezision die Laengsachse oder Horizontalachse des Spindelstockes 4 in genau horizontaler Lage gehalten wird. Somit ist die Ausfuehrung hochpraeziser, spanabhebender Bearbeitungsvorgaenge moeglich.

Der Kolben 11 stellt eine Ausgleichsvorrichtung fuer den Spindelstocke 4 bei Auf- und Abwaertshub dar und ist an sich bekannt. Der Kolben 11 ermoeglicht das Ausfahren der Kolbenstange 12 in Kontrast zu einem einstellbaren hydraulichen Druck, sobald der Spindelstock 4 und der Schlitten 2 eine nach unten gerichtete Bewegung durchfuehren. Die Kolbenstange 12 faehrt hingegen in den Zylinder 11 ein, wenn der Spindelstock 4 und der Schlitten 2 eine nach oben gerichtete Bewegung entlang den Vertikalfuehrungen des Maschinenkoerpers 1 beginnen. Somit wird gewaehrlichstet, dass das Halteseil oder die Haltekette 7 stets gespannt bleiben und der Spindelstock stets im Schwerpunkt S aufgehaengt und gehalten ist.

Patentansprueche

1. Ausgleichsvorrichtung fuer eine Werkzeugmaschine, **dadurch gekennzeichnet**, dass das eine Ende eines Ausgleichsseiles (7) oder einer Ausgleicheskette (7) in Uebereinstimmung mit dem Schwerpunkt (S) eines verschiebbar gelagerten Spindelstocks (4) der Werkzeugmaschine (1) an diesem befestigt ist, dass dieses Seil (7) oder diese Kette (7) von einem um eine Vertikalachse (X) schwenkbar gelagerten Arm (14) aufgenommen wird, dass dieser Schwenkarm (14) mit einem Zahnsegment (16) wirkverbunden ist, mit dem ein Zahnrad (18) kaemmt, das ueber einen steuerbaren Servomotor (19, 20) antreibar ist, dass der schwenkbare Arm (14) mit einem weiteren Zahnsegment (17) verbunden ist, das mit dem Zahnrad (21) eines ersten Transduktors (22) kaemmt, dass der verschiebare Spindelstock (4) eine Zahnstange (23) aufweist, die parallel zu den horizontal angeordneten Fuehrungen (3) angeordnet ist, dass diese Zahnstange (23) mit einem Zahnrad (24) eines zweiten Transduktors (25) in Wirkverbindung steht, und dass die Ausgaenge des ersten Transduktors (22) und die Ausgaenge des zweiten Transduktors (25) mit einer Vergleichereinheit (28) verbunden sind, die aus der Differenz der von den Transduktoren (22,25) zugefuehrten Signalen ein verstaerktes Ausgangssignal erstellt, das der Steuereinrichtung des steuerbaren Servomotores (20 zugefuehrt wird.

2. Ausgleichsvorrichtung, nach Patentanspruch 1, **dadurch gekennzeichnet**, dass der Schwenkarm (14) in seinem Inneren Umlenkraeder (8,9) fuer das Zugseil (7) oder die Zugkette (7) aufweist.

3. Ausgleichsvorrichtung, nach Patentanspruch 1, **dadurch gekennzeichnet**, dass zwischen dem Zahnrad (18), der bogenfoermigen Verzahnung (16) und dem steuerbarn Servomotor (20) ein Reduziergetriebe (19) vorgesehen ist.

4. Ausgleichsvorrichtung, nach Patentanspruch 1, **dadurch gekennzeichnet**, dass das Zugseil (7) oder die Zugkette (7') ueber einen Hydraulikzylinder (11) gespannt wird, der durch eine festlegbaren Hydraulikdruck beaufschlagt wird.

0177881